Europäisches Patentamt

European Patent Office

Office européen des brevets

(11) Publication number: **0 250 271 B1**

## EUROPEAN PATENT SPECIFICATION

(45) Date of publication of patent specification: **11.11.92**   (51) Int. Cl.5: **B41J  2/04**, C09D 11/00

(21) Application number: **87305516.4**

(22) Date of filing: **22.06.87**

(54) Ink jet recording method.

(30) Priority: **20.06.86 JP 145618/86**

(43) Date of publication of application:
**23.12.87 Bulletin  87/52**

(45) Publication of the grant of the patent:
**11.11.92 Bulletin  92/46**

(84) Designated Contracting States:
**DE FR GB IT**

(56) References cited:
**EP-A- 0 056 333**

(73) Proprietor: **CANON KABUSHIKI KAISHA
30-2, 3-chome, Shimomaruko, Ohta-ku
Tokyo(JP)**

(72) Inventor: **Iwata, Kazuo
1-14-102, Kirigaoka 4-chome Midori-ku
Yokohama-shi Kanagawa-ken(JP)**
Inventor: **Tochihara, Shinichi
2301-5, Yokouchi
Hiratsuka-shi Kanagawa-ken(JP)**

(74) Representative: **Beresford, Keith Denis Lewis
et al
BERESFORD & Co. 2-5 Warwick Court High
Holborn
London WC1R 5DJ(GB)**

Rank Xerox (UK) Business Services

## Description

This invention relates to a method of ink jet recording, and in particular to such a method which can be used with paper commonly available in the office or at home.

Various ink jet recording methods have been investigated and proposed. Amongst these is the so-called drop-on-demand system in which recording is carried out using paper as the recording medium. This method permits miniaturization of the printer and its scope of application is extremely broad and detailed investigations have been made concerning the ink, the paper and the mechanism for the printer. However, an ink jet printer which works by the drop-on-demand system suffers from a number of problems, the greatest of which is that paper commonly used in the office or at home eg. note paper, report paper, copying paper, letter paper or postcards cannot be used. The reason is that when an ink jet printer working by the drop-on-demand system forms an image on the above-mentioned kinds of paper, the printed ink can spread along the fibres of the paper so that the shape of a printed dot becomes indefinite. This phenomenon is known as "feathering" and causes fine lines, fine letters eg. for complicated Chinese characters defined by the capitals JIS second standard to become indistinct and difficult to read in many cases.

Many of the above-mentioned forms of paper are frequently sized during the paper making step to prevent feathering from occurring when writing is carried out with an aqueous ink eg. by a fountain pen. When printing is carried out by an ink jet printer onto such papers, it is difficult for the ink to penetrate into the paper so that the drying characteristics of the ink and printed regions of the paper becomes poor. As a result printed letters can become smudged if they brush against the cover of the printer and/or when the printed matter is touched by hand the ink may attach itself to the hand.

Various suggestions have been made for improving the feathering and drying charateristics of images printed by the ink jet printer. For example, in unexamined Japanese Patent Publication No. 57862/1981 it has been suggested that to use an ink whose pH is strongly alkaline. In unexamined Japanese Patent Publication No. 29546/1980 it has been proposed to add a large amount of surfactant to the ink. In Japanese Patent Publication No. 13675/1983 it has been proposed to add a water soluble polymer to the ink. The use of a strongly alkaline ink suffers from the disadvantage that it can be dangerous when the ink comes into contact with the hands and also that for papers sized using certain kinds of sizing agents the feathering and drying characteristics are not good. The use of an ink containing a large amount of surfactant can, depending upon the paper used for the recording medium, give rise to severe feathering. Depending upon the condition of the printer head, ink ejection can fail to occur because the ink is retracted from the surface of the orifice or because the whole surface of the orifice becomes wetted with ink. When a water soluble polymer is added to the ink, although the feathering and drying characteristics are improved to some extent, the problems arise that the ink tends to dry at the orifice tip of the printer head, and that after a printer has been left standing in a room for several minutes without printing taking place, normal ejection of the ink cannot then be carried out.

Accordingly, various methods have been proposed for improving the printer mechanism, but there is as yet no ink-jet recording method which solves all of the problems of feathering, rapid drying of printed letters and preventing drying of the ink at the printer head. However, the present invention provides a method of ink jet recording which comprises ejecting ink droplets according to the drop-on-demand system onto a sized recording medium which has exposed fibres at the surface where recording is to be carried out, in which

(a) a droplet of ink ejected from one orifice by one ejection signal has an average diameter $\underline{d}$ ($\mu$m) defined by the following formula (1)

$$d = 2(3V/4\pi)^{1/3} \qquad (1)$$

where V ($\mu$m$^3$) denotes the volume of said droplet that satisfies the following formula (2)

$$20 \leqq d \leqq 90 \qquad (2)$$

and

(b) the average velocity $\underline{v}$ (m/sec) of an ink droplet flying from the orifice to a distance of 0.5 mm satisfies the following formula (3)

$$6 < v \leqq 15 \qquad (3)$$

Preferably the ink comprises a water soluble dye a water soluble organic solvent and water as its main components and its surface tension $\gamma$ (in dyn/cm, where 1 dyn/cm = $1\times10^{-3}Nm^{-1}$) of the ink satisfies the following equation (4)

$$70 \geq \gamma \geq 35 \qquad (4)$$

and further that the viscosity in cp (where 1 cp = mPaS) of the ink at 25°C satisfies the following formula (5)

$$1.5 \leq \eta \leq 3.5 \qquad (5)$$

In the ink jet recording method of the present invention, it is an important condition to have a small amount of ink impinged at a high velocity against a recording medium.

That is, when the calculated diameter of ink droplet calculated from the ejected volume of the ink ejected from one orifice by one ejecting signal is defined as $\underline{d}$ (um) and the average velocity of the ink droplet flying from the orifice to a distance of 0.5 mm is defined as $\underline{v}$ (m/sec), the above mentioned $\underline{d}$ and $\underline{v}$ are required to satisfy the following formulae:

$$20 \leq d \leq 90 \qquad (6)$$
$$6 < v \leq 15 \qquad (7)$$

Further, the ink to be used in the present invention is so called aqueous dye ink, and the surface tension $\gamma$ (dyn/cm) of the ink and the viscosity $\eta$ (cp) at 25°C are required to satisfy the following formulae (8) and (9):

$$70 \geq \gamma \geq 35 \qquad (8)$$
$$1.5 \leq \eta \leq 3.5 \qquad (9).$$

To describe in more detail, ink droplets with calculated droplet diameter $\underline{d}$ not more than 20 $\mu$m could be ejected from the orifice with difficulty in many cases. On the contrary, when ink droplets of 90 $\mu$m diameter or more are impinged against a recording medium and the average velocity $\underline{v}$ of the ink droplet is so low as 6 m/sec or lower, the ink becomes the state as if placed gently without spreading on the surface of the recording medium, whereby the apparent thickness of the ink layer on the recording medium becomes thicker, so that prolonged time is required for evaporation of water and solvent in the ink. Thus, the so called drying characteristic of printed letters becomes slower and it cannot be recognized to be a preferable recording method.

On the contrary, if the average velocity of ink droplet is so fast as exceeding 15 m/sec, the ink is rapidly spread on the recording medium, whereby the apparent thickness of ink layer becomes thinner, to result in good drying characteristic of printed letters. However, scattering phenomenon of the ink tends to be observed when the ink is impinged against the recording medium, and fine ink droplets are attached around the dots on the recording medium to give contaminated printed letters. Thus, it cannot also be recognized to be a preferable recording method.

Accordingly, with regard to $\underline{d}$ and $\underline{v}$, it is required that they should be made within the ranges as shown by the above formulae (6) and (7). More preferably, the ranges of $\underline{d}$ and $\underline{v}$ are represented by the formulae $34 \leq d \leq 82$ and $6.5 \leq v \leq 14$, respectively.

Further, according to the investigation of the surface tension $\gamma$ of ink, when the surface tension of ink is less than 35 dyn/cm ($35\times10^{-3}Nm^{-1}$), it has been found that in the case when printing is performed under any ink composition and printing condition, at the moment when the ink is impinged against the recording medium or within the time until the ink loses fluidity by evaporation of water or solvent in the ink, the ink is penetrated into the inner portion of the pulp fibers which is constituent of paper or comes irregularly into the space between the pulp fibers to form feathering.

Also, with respect to the viscosity $\eta$ of ink, if it is less than 1.5 cp (1.5 mPa.s), no stable ejecting can be obtained, while with an ink exceeding 3.5 cp (3.5 mPa.s), feathering tends to be generated much when printed, although its reason is not clarified. As to the composition of the ink, it is preferable to use so called aqueous dye ink comprising a water-soluble dye, a water-soluble organic solvent and water as main components. As the result of investigation about so called oily ink by use of an oil-soluble dye, it was impossible to make smaller feathering of printing irrespectively of printing conditions.

As described above, the present inventors have made various investigations on the characteristics of ink, conditions of printing, etc., and consequently accomplished the present invention.

When recording is performed on a recording medium by the recording method of the present invention, ink can be stably ejecting from an orifice.

Also, calling attention on the ink per unit area of the printed portion, when the case of performing printing by spreading uniformly the small ink droplets by impinging them at a certain speed against a recording medium to fill completely the space between dot and dot as in the present invention is compared with the case when printing is performed to fill completely the space between dot and dot by printing with increased density without spreading by impingement of small ink droplets with relatively slower speed or the case in which the space between dot and dot is completely filled by performing printing with large droplets under the condition where no feathering is generated, the recording method according to the present invention can be the least in amount of the ink per unit area, and therefore the drying characteristic of the printed letters according to the present invention may be considered to be the best.

Further, as described above, feathering of printed lettters can be suppressed, probably because no excessive ink exists on the recording medium by suppressing the amount of ink per unit area at a small level. Addtionally, as the volatile components such as water, etc. in the ink are evaporated at the printed portion, the viscosity of the ink at the printed portion will be abruptly elevated, whereby the ink droplets lose fluidity to become more difficult in generating feathering and can maintain dot shape approximate to true circle, and it may be considered that the drying characteristic of the printed matter in practical application is sufficient even when the printed portion is touched with fingers, etc.

The ink which can be used in the present invention comprises a water-soluble dye, a water-soluble organic solvent and water as the main components, with its surface tension range being 35 dyn/cm ($35 \times 10^{-3} Nm^{-1}$) (including 35 dyn/cm ($35 \times 10^{-3} Nm^{-1}$)) to 70 dyn/cm ($70 \times 10^{-3} Nm^{-1}$) (including 70 dyn/cm ($70 \times 10^{-3} Nm^{-1}$)), and the viscosity range at the 25°C being 1.5 cP (1.5 mPa.s) (including 1.5 cp (1.5 mPa.s)) to 3.5 cP (3.5 mPa.s) (including 3.5 cp (3.5 mPa.s)), and otherwise its composition is not particularly defined.

As the water-soluble dye, almost all of water-soluble acidic dyes, direct dyes, basic dyes, reactive dyes, food dyes as described in color index can be used. Also, any of water-soluble dyes not described in color index can be used.

Examples of water-soluble organic solvent to be used in the present invention may include polyhydric alcohols such as ethylene glycol, diethylene glycol, triethylene glycol, polyethylene glycol, thiodiethanol, propylene glycol, polypropylene glycol, ethylene oxide-propylene oxide copolymer, 1,3-butanediol, 1,4-butanediol, hexylene glycol, glycerin, etc., and derivatives such as alkyl ether, aryl ether thereof, N-methyl-2-pyrrolidone, 1,3-dimethylimidazolidinone, sulforane, $\gamma$-butyrolactone, tetrahydrofurfuryl alcohol, diacetone alcohol, triethanolamine, etc. Solvents other than those mentioned above may also be used while controlling the surface tension and the viscosity within the ranges as specified in the present invention when formed into an ink.

The ink to be used in the present invention comprises mainly the components as mentioned above. In addition, there may be added various additive such as surfactants, pH controlling agents, anti-rust agents, preservatives, antifungal agents, antioxidants, evaporation accelerators, chelating agents, etc., if desired.

Also, in the ink jet recording method according to the Drop-on-Demand system in the present invention, the calculated diameter $\overline{d}$ of ink droplet obtained by calculation from the discharged volume of ink ejected from one orifice by one ejecting signal and the average velocity $\overline{v}$ of the ink droplet flying from the orifice to a distance of 0.5 mm are specifically defined, but these values of $\overline{d}$ and $\overline{v}$ can be set under the specified conditions depending on various conditions such as the kind of the ejecting energy generating source, its size, shape, application voltage, etc., and the general ejecting method and ejecting means of ink are not limited at all.

Therefore, by setting the above various parameters under the conditions as disclosed by the present invention, the effect intended by the present invention can be for the first time exhibited, and various methods for ink jet recording according to the Drop-on-Demand system known in the prior art can be employed as the ejecting method of ink.

Thus, it is possible to use effectively, for example, the so called Gould type printer utilizing a piezoelectric element, Steme type printer, and also the ink jet system in which ink is ejected from a nozzle by foaming by the action of heat energy by the method as described in Unexamined Japanese Patent Publication No. 59936/1979.

The present invention is described in more detail by referring to Examples. In the Ink examples, all % indicate % by weight.

Ink example 1

Ink (1) was prepared according to the following formulation.

```
   C.I. Direct Black 154                  3.5 %

   Ethylene oxide adduct of p-cresol      8.5 %

    (added with 3 mols of ethylene oxide on an

    average)

   Ethylene oxide adduct of phenol        1.5 %

    (added with 2 mols of ethylene oxide on an

    average)

   Polyoxyethylene-polyoxypropylene copolymer

                                          5.0 %

    (average molecular weight 1000)

   Ethylene glycol                        5.0 %

   Water                                 76.5 %
```

The above ink (1) had the viscosity at 25°C of 2.9 cP (2.9 mPa.s) and the surface tension of 47.3 dyn/cm (47.3x10$^{-3}$Nm$^{-1}$).

Ink example 2

Ink (2) was prepared according to the following formulation.

```
   C.I. Direct Black 62                   1.8 %

   Propylene oxide adduct of ethylene glycol

                                         15.0 %

    (added with 1.2 mols of propylene oxide on an

    average)

   Diethylene glycol monomethyl ether     2.0 %

   Glycerin                               5.0 %

   Scoarol 700                            0.03 %

    (trade name, nonionic surfactant; produced by

    Kao Atlas K.K.)

   Water                                 76.17 %
```

The above ink (2) had the viscosity at 25°C of 2.4 cP (2.9 mPa.s) and the surface tension of 38.2 dyn/cm ($38.2 \times 10^{-3}$ Nm$^{-1}$).

Ink example 3

Ink (3) was prepared according to the following formulation.

Dye represented by the following structural formula 2.2 %

Diethylene glycol                          15.0 %

Propylene glycol monomethyl ether          3.0 %

Water                                      79.8 %

The above ink (3) had the viscosity at 25°C of 1.7 cP (1.7 mPa.s) and the surface tension of 55.3 dyn/cm ($55.3 \times 10^{-3}$ Nm$^{-1}$).

Ink example 4

Ink (4) was prepared according to the following formula.

Dye represented by the following structural

    formula                                       1.9 %

| | |
|---|---|
| C.I. Direct Blue 199 | 0.1 % |
| Triethylene glycol | 25.0 % |
| Polyglyme | 2.0 % |
| (trade name, solvent; produced by Toho Kagaku Kogyo K.K.) | |
| Water | 71.0 % |

The above ink (4) had the viscosity at 25°C of 3.3 cP (3.3 mPa.s) and the surface tension of 49.3 dyn/cm ($49.3 \times 10^{-3} Nm^{-1}$).

Ink example 5

Ink (5) was prepared according to the following formula.

| | |
|---|---|
| C.I. Food Black 2 | 4.5 % |
| Propylene oxide adduct of ethylene glycol (PO 1.2 mols) | 6.0 % |
| Diethylene glycol | 20.0 % |
| Polyglyme | 4.0 % |
| Water | 65.5 % |

The above ink (5) had the viscosity at 25°C of 2.8 cP (2.8 mPa.s) and the surface tension of 54.8 dyn/cm ($54.8 \times 10^{-3} Nm^{-1}$).

Ink example 6

Ink (6) was prepared according to the following formulation.

Dye represented by the following structural

formula                                              2.0 %

$H_3C-\!\!\!\!\bigcirc\!\!\!\!-N=N-$ ... $SO_3Na$ ... $OH$ $NHCO-\!\!\!\!\bigcirc$ ... $SO_3Na$ ... $SO_3Na$

Triethylene glycol                                   15.0 %

Triethylene glycol monomethyl ether    3.0 %

Ethylene oxide adduct of p-cresol       2.0 %

 (added with 2.5 mols of EO on an average)

Water                                                78.0 %

The above ink (6) and the viscosity at 25°C of 2.9 cP (2.9 mPa.s) and the surface tension of 51.1 dyn/cm ($51.1 \times 10^{-3} Nm^{-1}$).

Ink example 7

Ink (7) was prepared according to the following formula.

C.I. Direct Black 62                              1.8 %

Propylene oxide adduct of ethylene glycol

                                                     15.0 %

 (added with 1.2 mols of propylene oxide on an

 average)

Diethylene glycol monomethyl ether    2.0 %

Glycerin                                             5.0 %

Scoarol 700                                    0.0005 %

Water                                               76.2 %

The above ink (7) had the viscosity at 25°C of 2.4 cP (2.4 mPa.s) and the surface tension of 54.2 dyn/cm ($54.2 \times 10^{-3} Nm^{-1}$).

The above inks (1)-(7) were applied to a printer and printed on a commercially available copying paper. The recording conditions are shown in Table 1 and recording characteristics in Table 2.

Table 1

| No. | Ink No. | Viscosity (cp) $(1cp = 1mPa.s)$ | Surface tension (dyne/cm) $(1 dyne/cm = 1 \times 10^{-3} Nm^{-1})$ | Calculated droplet diameter d (µm) | Droplet velocity v (m/sec) | Printer |
|---|---|---|---|---|---|---|
| Example 1 | ( 1 ) | 2.9 | 47.3 | 75 | 14 | P |
| 2 | ( 2 ) | 2.4 | 38.2 | 44 | 9 | $B_1$ |
| 3 | ( 3 ) | 1.7 | 55.3 | 34 | 12 | $B_1$ |
| 4 | ( 4 ) | 3.3 | 49.3 | 57 | 7 | $B_2$ |
| 5 | ( 5 ) | 2.8 | 54.8 | 47 | 6.5 | P |
| 6 | ( 6 ) | 2.9 | 51.1 | 56 | 6.8 | $B_2$ |
| 7 | ( 7 ) | 2.4 | 54.2 | 44 | 9.8 | $B_1$ |
| 8 | · ( 5 ) | 2.8 | 54.8 | 82 | 8.1 | $B_3$ |
| Comparative Example 1 | ( 4 ) | 3.3 | 49.3 | 120 | 10 | P |
| 2 | ( 4 ) | | | 58 | 3.5 | $B_2$ |
| 3 | ( 4 ) | | | 62 | 22 | P |
| 4 | ( 3 ) | 1.7 | 55.3 | 98 | 8.0 | $B_3$ |
| 5 | ( 5 ) | 2.8 | 54.8 | 58 | 5.7 | $B_2$ |
| 6 | ( 5 ) | 2.8 | 54.8 | 38 | 17.0 | $B_4$ |

## Table 2

| No. | Drying characteristic of printed letters | Quality of printed letters |
|---|---|---|
| Example 1 | o | o |
| 2 | o | o |
| 3 | o | o |
| 4 | o | o |
| 5 | o | o |
| 6 | o | o |
| 7 | o | o |
| 8 | o | o |
| Comparative example 1 | Δ | x |
| 2 | x | x |
| 3 | o | x |
| 4 | Δ | x |
| 5 | Δ | o |
| 6 | o | x |

As to the drying characteristic of the printed letters, the printed letters were rubbed with a filter paper [No. 2 (trade name) produced by Toyo Roshi] at the time of 10, 20, 30, 40, 50 and 60 seconds passed after printing by a printer on a commercially available copying paper, respectively, and each was judged based on the number of seconds passed until the printed matter is no longer contaminated (measured at 20°C ± 5°C, 50 ± 10 %RH) as follows:

o :     within 20 seconds

Δ :     20 - 40 seconds

x :     40 seconds or longer.

As to the printer, $B_1 \sim B_4$ show ink jet printers utilizing heat generating element as the ejecting energy source of ink ($B_1$ has a orifice size 25 × 20 μm, driving voltage 29 V and frequency 2 KHz, $B_2$ has an orifice size 50 x 40 μm, driving voltage 25.5 V and frequency 2 KHz, $B_3$ has an orifice size 55 × 50 μm, driving voltage 28.5 V and frequency 1.2 kHz and $B_4$ has an orifice size 20 × 20 μm, driving voltage 29.5 V, frequency 1.0 kHz), and P shows an ink jet printer utilizing a piezovibrator as the ejecting energy source of ink (modified product of PJ1080A model, produced by Canon).

As to the printing quality, after printing on a commercially available copying paper, the printed matter is sufficiently dried by leaving to stand for 1 hour, and the extent of feathering, degree of scattering of the ink around the dots, etc., were judged comprehensively, and the case when they are good is rated as o and the bad case as x.

Further, the average velocity v of ink droplets was measured according to a procedure mentioned below. A microscope with a CCD camera is set so that an orifice tip of an ink jet recording head and a position distant by 0.5 mm from its tip may be monitored in a single image of a TV monitor display. The time t (sec.) required until the center of a main droplet in ink droplets flys from the orifice top to a distance of 0.5 mm is measured by use of a stroboscope with a delay circuit while changing its emission timing. Then, the average velocity $\bar{v}$ (m/sec) is determined according to the formula

$$v_{|} = \frac{1}{2000t}.$$

As can be seen clearly from the above description, the recording method of the present invention is extremely good in drying characteristic of printed letters even when printed on commercially available general papers, which are subjected to sizing and have fibers exposed on the surface to be recorded, such as note, reporting paper, copying paper, letter paper, postcard, etc., and it is a recording method which is also good in quality of printed letter.

**Claims**

1. A method of ink jet recording which comprises ejecting ink droplets according to the drop-on-demand system onto a sized recording medium which has exposed fibres at the surface where recording is to be carried out, in which

    (a) a droplet of ink ejected from one orifice by one ejection signal has an average diameter $\bar{d}$ (μm) defined by the following formula (1)

    d = 2(3V/4$\pi$)$^{1/3}$    (1)

    where V (μm$^3$) denotes the volume of said droplet that satisfies the following formula (2)

    20 ≤ d ≤ 90    (2)

    and

    (b) the average velocity $\bar{v}$ (m/sec) of an ink droplet flying from the orifice to a distance of 0.5 mm satisfies the following formula (3)

    6 < v ≤ 15    (3)

2. An ink jet recording method according to claim 1, wherein the ink has a surface tension of 0.035 through 0.07 Nm$^{-1}$ (35 through 70 dyn/cm) at 25°C and the viscosity of 1.5 through 3.5 m Pa.S (1.5 through 3.5 cp) at 25°C.

3. An ink jet recording method according to claim 1 or 2, wherein the ink jet comprises a water-soluble dye, a water-soluble organic solvent and water as main components.

4. An ink jet recording method according to any preceding claim, wherein the calculated diameter $\bar{d}$ (μm) and the average velocity $\bar{v}$ (m/sec) of the ink droplet satisfy the following formulae: respectively:

    34 ≤ d ≤ 82
    6.5 ≤ v ≤ 14.

**Patentansprüche**

1. Tintenstrahlaufzeichnungsverfahren, umfassend das Ausstoßen von Tintentröpfchen nach dem Tröpfchen-auf-Verlangen-System auf ein geleimtes Aufzeichnungsmedium, das auf der Oberfläche dort, wo die Aufzeichnung durchgeführt werden soll, freiliegende Fasern aufweist, wobei

    (a) ein Tintentröpfchen, das aus einer Öffnung mittels eines Ausstoßsignals ausgestoßen wird, einen mittleren Durchmesser $\bar{d}$ (μm) gemäß nachfolgender Formel (1)

    d = 2(3V/4$\pi$)$^{1/3}$    (1),

    mit V (μm$^3$) = Tröpfchenvolumen

aufweist und die nachfolgende Bedingung (2) erfüllt:

$20 \leqq d \leqq 90$     (2),

und

(b) die mittlere Geschwindigkeit $\bar{v}$ (m/sek) eines von einer Austragsöffnung aus fliegenden Tröpfchens in einer Entfernung von 0,5 mm hiervon die nachfolgende Bedingung (3) erfüllt:

$6 < \bar{v} \leqq 15$     (3).

2.     Tintenstrahlaufzeichnungsverfahren nach Anspruch 1,
bei dem die Tinte eine Oberflächenspannung von 0,035 bis 0,07 $Nm^{-1}$ (35 bis 70 dyn/cm) bei 25° C und eine Viskosität von 1.5 bis 3.5 m Pa.S (1, 5 bis 3,5 CP) bei 25° C aufweist.

3.     Tintenstrahlaufzeichnungsverfahren nach Anspruch 1 oder 2,
bei dem der Tintenstrahl als Hauptbestandteile einen wasserlöslichen Farbstoff, ein wasserlösliches organisches Lösungsmittel und Wasser aufweist.

4.     Tintenstrahlaufzeichnungsverfahren nach einem der vorstehenden Ansprüche,
bei dem der errechnete Durchmesser $\bar{d}$ ($\mu$m) und die Durchschnittsgeschwindigkeit $\bar{v}$ (m/sek) des Tintentröpfchens die nachfolgenden Bedingungen erfüllen:

$34 \leqq d \leqq 82$
$6,5 \leqq v \leqq 14.$

## Revendications

1.     Procédé d'enregistrement par jet d'encre, qui consiste à éjecter des gouttelettes d'encre conformément au système formant des gouttes sur demande, sur un milieu d'enregistrement apprêté qui présente des fibres exposées à la surface où l'enregistrement doit être effectué, dans lequel
(a) une gouttelette d'encre éjectée par un orifice sous l'effet d'un signal d'éjection a un diamètre moyen $\bar{d}$ ($\mu$m) défini par la formule (1) suivante :

$d = 2(3V/4\pi)^{1/3}$     (1)

où V ($\mu$m³) désigne le volume de ladite gouttelette, qui satisfait à la formule (2) suivante :

$20 \leqq D \leqq 90$     (2)

et
(b) la vitesse moyenne $\bar{v}$ (m/s) d'une gouttelette d'encre couvrant depuis l'orifice une distance de 0,5 mm satisfait la formule (3) suivante :

$6 < \bar{v} \leqq 15$     (3)

2.     Procédé d'enregistrement par jet d'encre suivant la revendication 1, dans lequel l'encre a une tension superficielle de 0,035 à 0,07 $Nm^{-1}$ (35 à 70 dynes/cm) à 25° C et une viscosité de 1, 5 a 3, 5 mPa.s (1,5 à 3,5 cP) à 25° C.

3.     Procédé d'enregistrement par jet d'encre suivant la revendication 1 ou 2, dans lequel le jet d'encre comprend un colorant hydrosoluble, un solvant organique hydrosoluble et de l'eau comme principaux constituants.

4.     Procédé d'enregistrement par jet d'encre suivant l'une quelconque des revendications précédentes, dans lequel le diamètre calculé $\bar{d}$ ($\mu$m) et la vitesse moyenne $\bar{v}$ (m/s) de la gouttelette d'encre satisfont respectivement les relations suivantes :

$34 \leqq d \leqq 82$

$6,5 \leqq v \leqq 14.$